# EUROPEAN PATENT APPLICATION

(11) **EP 4 712 156 A1**
(43) Date of publication of application: **18.03.2026**
(21) Application number: 24803259.1
(22) Date of filing: 27.02.2024
(51) Int. Cl.: H01M 4/131, H01M 4/13, H01M 4/62

(54) **ELECTRODE AND BATTERY**

(30) Priority: 09.05.2023 JP 2023077410
(71) Applicant: Panasonic Intellectual Property Management Co., Ltd., Kadoma-shi, Osaka 571-0057 (JP)
(72) Inventor: KAMITAKE, Hiroki, kadoma-shi, Osaka 571-0057 (JP); OSHIMA, Tatsuya, kadoma-shi, Osaka 571-0057 (JP); TAMURA, Takaaki, kadoma-shi, Osaka 571-0057 (JP); MORIOKA, Kazuhiro, kadoma-shi, Osaka 571-0057 (JP); NISHIYAMA, Seiji, kadoma-shi, Osaka 571-0057 (JP)
(74) Representative: Grünecker Patent- und Rechtsanwälte PartG mbB
(86) International application number: PCT/JP2024/006946
(87) International publication number: WO 2024/232144

(57) **Abstract**

An electrode according to the present disclosure includes an active material, a solid electrolyte, and a conductive additive, in which a length of an interface of the conductive additive per unit area of a cross section of the electrode is greater than 0.58 µm/µm².

## Description

### Technical Field

The present disclosure relates to an electrode and a battery.

### Background Art

PTL 1 discloses a negative electrode that includes a current collector and an active material layer in contact with at least one surface of the current collector. The active material layer includes aggregates of some of active materials or some of conductive additives.

### Citation List

### Patent Literature

PTL 1: Japanese Unexamined Patent Application Publication No. 2021-044195

### Summary of Invention

### Technical Problem

In the related art, it is desirable to further improve the discharge capacity retention rate of the battery.

### Solution to Problem

An electrode of the present disclosure includes:
an active material,
a solid electrolyte, and
a conductive additive,
in which a length of the interface of the conductive additive per unit area of a cross section of the electrode is greater than 0.58 µm/µm².

### Advantageous Effects of Invention

According to the present disclosure, the discharge capacity retention rate of the battery can be improved.

### Brief Description of Drawings

[Fig. 1] Fig. 1 is a cross sectional view illustrating a schematic structure of an electrode according to a first embodiment.
[Fig. 2] Fig. 2 is a cross-sectional view illustrating a schematic structure of a battery according to a second embodiment.

### Description of Embodiments

### (Underlying Knowledge Forming Basis of the Present Disclosure)

In order to improve electronic conductivity, a conductive additive is added to an electrode material containing an active material and a solid electrolyte. For example, when an electrode is prepared by applying a slurry containing an electrode material to a current collector, the conductive additive that has aggregated settles down in the direction of gravitational force, and this sometimes leads to uneven distribution of the conductive additive inside the electrode. When the distribution of the conductive additive is uneven, good electron conduction paths are not smoothly formed. As a result, the discharge capacity retention rate of the battery decreases.

The inventors of the present disclosure have conducted extensive studies to improve the discharge capacity retention rate of the battery. As a result, the inventors have conceived of the electrode of the present disclosure.

The embodiments of the present disclosure will now be described with reference to the drawings. The present disclosure is not limited to the embodiments below.

### (First Embodiment)

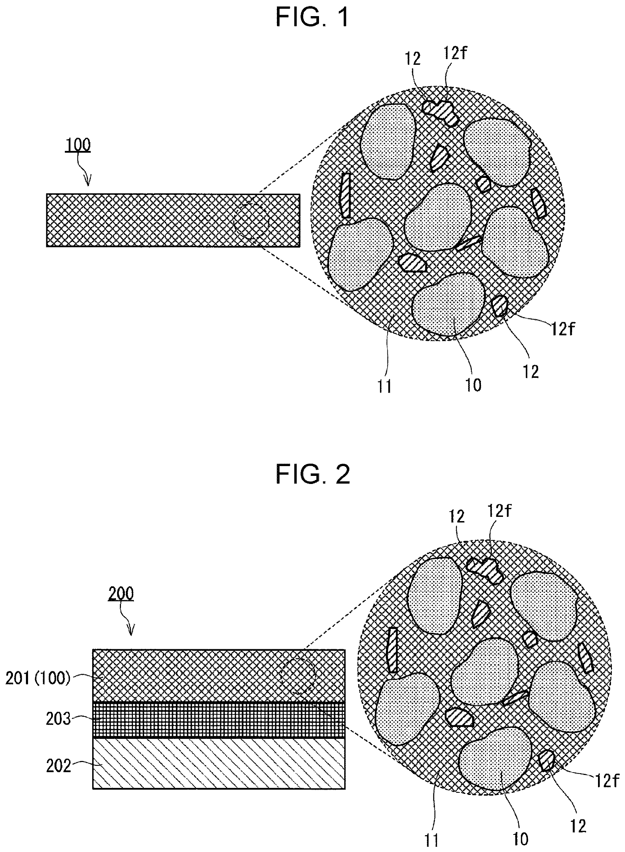

Fig. 1 is a cross-sectional view illustrating a schematic structure of electrode 100 according to a first embodiment.

The electrode 100 includes an active material 10, a solid electrolyte 11, and a conductive additive 12.

Here, an interface of the conductive additive 12 formed by contact between the conductive additive 12 and the solid electrolyte 11 or the active material 10 is defined as an interface 12f. An observation area under observation of a cross section of the electrode 100 is defined as A (unit: µm²). A total of lengths of the interfaces 12f confirmed within the observation area is defined as L (unit: µm). Here, the value L/A is defined as an interfacial perimeter Z. The interfacial perimeter Z represents the length of the interface 12f of the conductive additive 12 per unit area of a cross section of the electrode 100. According to the electrode 100 of the first embodiment, good electron conduction paths can be formed since the interfacial perimeter Z is greater than 0.58 µm/µm². As a result, the discharge capacity retention rate of the battery can improve.

The conductive additive often forms aggregates in the electrode. When the aggregates are excessively large or the amount thereof is excessively large, the distribution of the conductive additive inside the electrode may become uneven. When the distribution of the conductive additive is uneven, good electron conduction paths are not smoothly formed. As a result, the discharge capacity retention rate of the battery decreases.

The inventors of the present disclosure have conducted extensive studies and have found that, in a cross section of an electrode, the length of the interface of the conductive additive per unit area of the cross section of the electrode, that is, the interfacial perimeter Z, can reflect the dispersed state of the conductive additive. The larger the interfacial perimeter Z, the more evenly the conductive additive is dispersed, and thus electron exchange of the active material present in the electrode is facilitated. According to the electrode 100 of this embodiment, good electron conduction paths can be formed since the interfacial perimeter Z is greater than 0.58 µm/µm². As a result, the discharge capacity retention rate of the battery can improve.

The following method is used to calculate the interfacial perimeter Z.

An electrode 100 is processed with a cross section polisher to form a smooth and flat cross section. Here, the direction in which the cross section is processed may be any direction of the electrode 100. For example, when the electrode 100 has a plate shape, a cross section parallel to the in-plane direction of the plate-shaped electrode 100 may be formed, a cross section parallel to the thickness direction of the plate-shaped electrode 100 may be formed, or a cross section parallel to neither the in-plane direction nor the thickness direction may be formed.

The formed cross section is observed with a scanning electron microscope (SEM), and a cross section image (magnification: 500x) is acquired. Since the average state of the electrode 100 is desirably evaluated, a region sufficiently wide with respect to the median diameter of the particle group of the active material 10 contained in the electrode 100 is desirably observed by the SEM. For example, when the median diameter of the particles of the active material 10 contained in the electrode 100 is represented by D (unit: µm), the area A of the measurement region desirably satisfies A ≥ (20D)².

Next, from the obtained cross section image, a measurement region having an area A satisfying A ≥ (20D)² is selected and analyzed by image processing software Image J. In the cross section image of the electrode 100, the conductive additive 12 is identified as particles by using the Analyze Particles function of the Image J. The lengths of the interfaces 12f between the conductive additive 12 and the solid electrolyte 11 or the active material 10 are calculated. By this image analysis method, a total L of the lengths of the interfaces 12f of the particles of the conductive additive 12 is calculated.

At the interface 12f between the conductive additive 12 and the solid electrolyte 11 or the active material 10, it is possible that other substances such as a binder and a dispersing agent may exist. However, if such substances are not clearly confirmed in the cross section image, the particles of the targeted conductive additive 12 are used as the subject for calculating the total L of the lengths of the interfaces 12f.

Next, the total L of the lengths of the interfaces 12f is divided by the observation area A to obtain a length of the interface 12f of the conductive additive 12 per unit area of the cross section of the electrode 100, that is, the interfacial perimeter Z.

Note that, in the cross section image, when particles of the conductive additive 12 are connected to one another to form one assembly, the circumference of this assembly means the length of the interface 12f between the conductive additive 12 and the solid electrolyte 11 or the active material 10.

When it is difficult to calculate the total L of the lengths of the interfaces 12f by image analysis due to factors such as voids and low contrast between the conductive additive 12 and the solid electrolyte 11 or the active material 10, the cross section image may be image-processed as appropriate so that the particles are easily identifiable by the image processing software. When image processing using the cross section image is difficult, a different image may be prepared by tracing the interfaces 12f in the cross section image and the interfacial perimeter Z may be calculated by image-processing this image. In this description, the "particle identification" means identifying whether particles exist or not.

In order to remove noise after the image processing, particles having a particle area less than or equal to 5 pixels among the identified particles of the conductive additive 12 are not used in calculating the interfacial perimeter Z.

The interfacial perimeter Z in the electrode 100 may be greater than or equal to 0.60 µm/µm². According to this feature, the discharge capacity retention rate of the battery can be further improved.

The interfacial perimeter Z in the electrode 100 may be greater than or equal to 0.70 µm/µm² or may be greater than or equal to 0.80 µm/µm².

The interfacial perimeter Z in the electrode 100 may be less than or equal to 5 µm/µm². When the interfacial perimeter Z is less than or equal to 5 µm/µm², the conductive additive 12 helps form ion conduction paths in the solid electrolyte 11. As a result, the inner resistance of the electrode 100 can decrease. Thus, the battery can operate at a higher output.

### (Conductive additive)

Examples of the conductive additive 12 that can be used include graphites such as natural graphite and synthetic graphite, carbon blacks such as acetylene black and Ketjen black, conductive fibers such as carbon fibers, vapor-grown carbon fibers, carbon nanotubes, carbon nanofibers, and metal fibers, carbon fluoride, metal powders such as aluminum, conductive whiskers such as zinc oxide and potassium titanate, conductive metal oxides such as titanium oxide, and conductive polymer compounds such as polyaniline, polypyrrole, and polythiophene. The conductive additive 12 may contain any one of these materials or may contain at least two of these materials. The conductive additive 12 may be composed of any one of these materials or may be composed of at least two of these materials.

The conductive additive 12 may contain a carbon material. According to the aforementioned features, an electrode 100 can be produced at a low cost.

The conductive additive 12 may contain at least one selected from the group consisting of a fibrous carbon material and a granular carbon material. According to this feature, the dispersibility of the conductive additive 12 in the electrode 100 is easily improved, and thus the discharge capacity retention rate of the battery can be further improved.

The conductive additive 12 desirably contains a fibrous carbon material. According to this feature, the conductive additive 12 further helps form ion conduction paths in the solid electrolyte 11 As a result, the inner resistance of the electrode 100 can further decrease.

The fibrous carbon material may have an average fiber diameter less than or equal to 50 µm. According to this feature, the conductive additive 12 is less likely to aggregate, and thus the dispersibility of the conductive additive 12 in the electrode 100 can be further improved.

The lower limit of the average fiber diameter of the fibrous carbon material is not particularly limited. The lower limit of the average fiber diameter of the fibrous carbon material maybe, for example, 0.4 nm.

The fibrous carbon material may have an average length greater than or equal to 5 nm. According to this feature, the conductive additive 12 is less likely to aggregate, and thus the dispersibility of the conductive additive 12 in the electrode 100 can be further improved.

The upper limit of the average length of the fibrous carbon material is not particularly limited. The upper limit of the average length of the fibrous carbon material maybe, for example, 500 µm.

The average fiber diameter and the average length of the fibrous carbon material are determined by the following method. First, the fibrous carbon material is separated from the electrode 100 by using a solvent. Next, the fibrous carbon material (for example, five fibers) dispersed on a sample stage is observed with an SEM, and the fiber diameters and lengths are measured by image analysis or the like. The measured fiber diameters and lengths are respectively averaged to determine the average fiber diameter and the average length of the fibrous carbon material. When the fibrous carbon material is small, a transmission electron microscope (TEM) may be used in observation instead of the SEM to determine the average fiber diameter and the average length of the fibrous carbon material.

The granular carbon material may have a median diameter less than or equal to 100 nm. According to this feature, the dispersibility of the conductive additive 12 in the electrode 100 is easily improved.

The lower limit of the median diameter of the granular carbon material is not particularly limited. The lower limit of the median diameter of the granular carbon material may be, for example, 3 nm.

The conductive additive 12 may be a mixture of a fibrous carbon material and a granular carbon material. For example, the conductive additive 12 may be a mixture of a vapor-grown carbon fibers and acetylene black particles. By using a mixture of a fibrous carbon material and a granular carbon material, the cost can be cut while securing good electron conduction paths in the electrode 100.

The median diameter of the conductive additive 12 may be smaller than the median diameter of the active material 10. As a result, the active material 10 and the conductive additive 12 can form a good dispersed state. As a result, the electronic conductivity in the electrode 100 can be further improved.

### (Solid electrolyte)

The solid electrolyte 11 may contain at least one selected from the group consisting of a halide solid electrolyte, a sulfide solid electrolyte, an oxide solid electrolyte, a polymeric solid electrolyte, and a complex hydride solid electrolyte.

The solid electrolyte 11 may contain at least one selected from the group consisting of a halide solid electrolyte and a sulfide solid electrolyte. According to this feature, the output density of the battery can be improved.

The solid electrolyte 11 may contain a halide solid electrolyte. The solid electrolyte 11 may be a halide solid electrolyte.

A halide solid electrolyte is, for example, represented by composition formula (1) below. In composition formula (1), α, β, and γ each independently represent a value greater than 0. M includes at least one element selected from the group consisting of metal elements other than Li and metalloid elements. X includes at least one selected from the group consisting of F, Cl, Br, and I.

Formula (1): Li_{α}M_{β}X_{γ}

Metalloid elements include B, Si, Ge, As, Sb, and Te. Metal elements include all elements in groups 1 to 12 of the periodic table other than hydrogen and all elements in groups 13 to 16 of the periodic table other than B, Si, Ge, As, Sb, Te, C, N, P, O, S, and Se. In other words, metal elements are a group of elements that can be cations in forming inorganic compounds with halogen compounds.

Examples of the halide solid electrolyte that can be used include Li₃YX₆, Li₂MgX₄, Li₂FeX₄, Li(Al,Ga,In)X₄, Li₃(Al,Ga,In)X₆, and Li₃(Al,Ti)X₆ (X: F,Cl,Br,I).

In the present disclosure, when an element in a formula is expressed as "(Al,Ga,In)" or the like, this means at least one element selected from the group consisting of the elements inside the parentheses. In other words, (Al,Ga,In) means "at least one selected from the group consisting of Al, Ga, and In". The same applies to other elements. A halide solid electrolyte exhibits excellent ion conductivity.

According to this feature, the output density of the battery can be improved. Furthermore, thermal stability of the battery is improved, and generation of toxic gas such as hydrogen sulfide is suppressed.

In composition formula (1), M may include yttrium (Y). In other words, the halide solid electrolyte may contain Y as a metal element.

The halide solid electrolyte containing Y may be a compound represented by composition formula (2) below.

Formula (2): LiₐM_{b}Y_{c}X₆

In composition formula (2), a + mb + 3c = 6 and c > 0. In composition formula (2), M includes at least one element selected from the group consisting of metal elements other than Li and Y and metalloid elements. Here, m represents a valence of M. X includes at least one selected from the group consisting of F, Cl, Br, and I. M includes at least one selected from the group consisting of Mg, Ca, Sr, Ba, Zn, Sc, Al, Ga, Bi, Zr, Hf, Ti, Sn, Ta, and Nb.

Specific examples of the halide solid electrolyte containing Y that can be used include Li₃YF₆, Li₃YCl₆, Li₃YBr₆, Li₃YI₆, Li₃YBrCl₅, Li₃YBr₃Cl₃, Li₃YBr₅Cl, Li₃YBr₅I, Li₃YBr₃I₃, Li₃YBrI₅, Li₃YClI₅, Li₃YCl₃I₃, Li₃YCl₅I, Li₃YBr₂Cl₂I₂, Li₃YBrCl₄I, Li_{2.7}Y_{1.1}Cl₆, Li_{2.5}Y_{0.5}Zr_{0.5}Cl₆, and Li_{2.5}Y_{0.3}Zr_{0.7}Cl₆.

According to this feature, the output density of the battery can be further improved.

The halide solid electrolyte may be a fluoride solid electrolyte. A fluoride solid electrolyte has high potential resistance, and thus, for example, the initial resistance of the battery is expected to decrease.

A fluoride solid electrolyte may have any composition as long as F is contained. A fluoride solid electrolyte may contain, for example, Li and F.

The fluoride solid electrolyte may be, for example, a compound represented by composition formula (3) below.

Formula (3): Li₆₋ₙₓMₓF₆

In composition formula (3), x satisfies 0 < x < 2. M is at least one selected from the group consisting of metalloid atoms and metal atoms other than Li. Here, n represents the oxidation number of M.

In composition formula (3), M may be composed of a single atom or multiple atoms. When M is multiple types of atoms, n represents the weighted average of the oxidation numbers of the individual atoms.

For example, when M includes Ti (oxidation number = +4) and Al (oxidation number = +3), the Ti-to-Al molar ratio is Ti/Al = 3/7, and x = 1, n is 3.3 from the formula "n = 0.3 × 4 + 0.7 × 3".

In composition formula (3), x may satisfy, for example, 0.1 ≤ x ≤ 1.9, 0.2 ≤ x ≤ 1.8, 0.3 ≤ x ≤ 1.7, 0.4 ≤ x ≤ 1.6, 0.5 ≤ x ≤ 1.5, 0.6 ≤ x ≤ 1.4, 0.7 ≤ x ≤1.3, 0.8 ≤ x ≤ 1.2, or 0.9 ≤ x ≤1.1. M may include an atom having an oxidation number of +4, for example. M may include an atom having an oxidation number of +3, for example. M may include an atom having an oxidation number of +4 and an atom having an oxidation number of +3, for example.

In composition formula (3), M may include, for example, at least one selected from the group consisting of Ca, Mg, Al, Y, Ti, and Zr. M may include, for example, at least one selected from the group consisting of Al, Y, and Ti. M may include, for example, at least one selected from the group consisting of Al and Ti.

The fluoride solid electrolyte may be, for example, a compound represented by composition formula (4) below.

Formula (4): Li₃₋ₓTiₓAl₁₋ₓF₆

In composition formula (4), x may satisfy, for example, 0 ≤ x ≤ 1, 0.1 ≤ x ≤ 0.9, 0.2 ≤ x ≤ 0.8, 0.3 ≤ x ≤ 0.7, or 0.4 ≤ x ≤0.6.

The solid electrolyte 11 may contain a sulfide solid electrolyte. The solid electrolyte 11 may be a sulfide solid electrolyte.

A sulfide solid electrolyte can exhibit high ion conductivity. Thus, when the solid electrolyte 11 contains a sulfide solid electrolyte, the output density of the battery can be improved.

A sulfide solid electrolyte may have any composition as long as sulfur (S) is contained. A sulfide solid electrolyte may contain, for example, Li, P, and S. In addition, a sulfide solid electrolyte may further contain, for example, O, Ge, Si, etc.

A sulfide solid electrolyte may further contain, for example, a halogen etc.

A sulfide solid electrolyte may be, for example, of a glass ceramic type or of an argyrodite type. A sulfide solid electrolyte may contain, for example, at least one selected from the group consisting of LiI-LiBr-Li₃PS₄, Li₂S-SiS₂, LiI-Li₂S-SiS₂, Li₂S-B₂S₃, LiI-Li₂S-P₂S₅, LiI-Li₂O-Li₂S-P₂S₅, LiI-Li₂S-P₂O₅, LiI-Li₃PO₄-P₂S₅, Li₂S-GeS₂, Li₂S-GeS₂-P₂S₅, Li₂S-P₂S₅, Li₄P₂S₆, Li₇P₃S₁₁, and Li₃PS₄.

The sulfide solid electrolyte may be LiI-LiBr-Li₃PS₄. In the description below, "LiI-LiBr-Li₃PS₄" may be referred to as "LPS".

According to this feature, the output density of the battery can be further improved.

The solid electrolyte 11 may contain an oxide solid electrolyte. The solid electrolyte 11 may be an oxide solid electrolyte.

Examples of the oxide solid electrolyte that can be used include NASICON solid electrolytes such as LiTi₂(PO₄)₃ and element-substituted products thereof, perovskite solid electrolytes based on (LaLi)TiO₃, LISICON solid electrolytes such as Li₁₄ZnGe₄O₁₆, Li₄SiO₄, LiGeO₄, and element-substituted products thereof, garnet solid electrolytes such as Li₇La₃Zr₂O₁₂ and element-substituted products thereof, Li₃N and H-substituted products thereof, Li₃PO₄ and N-substituted products thereof, and glass or glass ceramics in which a material such as Li₂SO₄ or Li₂CO₃ is added to a base material containing an Li-B-O compound such as LiBO₂ or Li₃BO₃.

The solid electrolyte 11 may contain a polymeric solid electrolyte. The solid electrolyte 11 may be a polymeric solid electrolyte.

Examples of the polymeric solid electrolyte that can be used include compounds formed between polymeric compounds and lithium salts. The polymeric compound may have an ethylene oxide structure. By having an ethylene oxide structure, a large amount of lithium salts can be contained, and the ion conductivity can be further increased. Examples of the lithium salts that can be used include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. As a lithium salt, one lithium salt selected from these can be used alone. Alternatively, as a lithium salt, a mixture of two or more lithium salts selected from these can be used.

The solid electrolyte 11 may contain a complex hydride solid electrolyte. The solid electrolyte 11 may be a complex hydride solid electrolyte.

Examples of the complex hydride solid electrolyte that can be used include LiBH₄-LiI and LiBH₄-P₂S₅.

The shape of the solid electrolyte 11 is not particularly limited. Examples of the shape of the solid electrolyte 11 include a needle shape, a spherical shape, and an elliptical shape. For example, the shape of the solid electrolyte 11 may be granular.

For example, when the shape of the solid electrolyte 11 is granular (for example, spherical), the median diameter may be greater than or equal to 0.01 µm and less than or equal to 100 µm. When the median diameter is greater than or equal to 0.01 µm, the contact interface between the particles of the solid electrolyte 11 does not excessively increase, and the increase in ion resistance in the electrode 100 can be suppressed. Thus, the battery can operate at a high output. When the median diameter is less than or equal to 100 µm, the active material 10 and the solid electrolyte 11 easily form a good dispersed state in the electrode 100. Thus, the battery capacity can be easily increased.

The median diameter of the solid electrolyte 11 may be less than the median diameter of the active material 10. In this manner, the solid electrolyte 11 and the active material 10 can form a good dispersed state in the electrode 100.

### (Active material)

The active material 10 includes a material that can intercalate and deintercalate metal ions (for example, lithium ions).

The active material 10 may contain, for example, a positive electrode active material. Examples of the positive electrode active material that can be used include complex oxides containing transition elements, transition metal fluorides, polyanion materials, fluorinated polyanion materials, transition metal sulfides, transition metal oxysulfides, and transition metal oxynitrides. In particular, when a lithium-containing transition metal oxide is used as the positive electrode active material, the production cost can be decreased, and the average discharge voltage of the battery can be increased.

The active material 10 may contain, for example, a negative electrode active material. Examples of the negative electrode active material that can be used include metal materials, carbon materials, oxides, nitrides, tin compounds, and silicon compounds. The metal material may be an elemental metal. Alternatively, the metal material may be an alloy. Examples of the metal material include lithium metal and lithium alloys. Examples of the carbon material include natural graphite, coke, graphitizing carbon, carbon fibers, spherical carbon, synthetic graphite, and amorphous carbon. From the viewpoint of the capacity density, silicon (Si), tin (Sn), silicon compounds, and tin compounds are desirably used.

The active material 10 may contain a complex oxide containing a transition element. The active material 10 may be a complex oxide containing a transition element. According to this feature, the average discharge voltage of the battery can be increased. The complex oxide containing a transition element selected as the active material 10 may contain Li and at least one element selected from the group consisting of Mn, Co, Ni, and Al. Examples of such a material include Li(NiCoAl)O₂, Li(NiCoMn)O₂, and LiCoO₂.

The active material 10 may contain Li(NiCoAl)O₂. The active material 10 may be Li(NiCoAl)O₂. According to this feature, the energy density of the battery can be further increased. In the description below, "Li(NiCoAl)O₂" may be referred to as "NCA".

The active material 10 may contain Li(NiCoMn)O₂. The active material 10 may be Li(NiCoMn)O₂. According to this feature, the energy density of the battery can be further increased.

The active material 10 may contain a single active material or multiple active materials having compositions different from one another. According to this feature, the charge capacity of the battery can be improved.

At least part of the active material 10 may be coated with a coating material. According to this feature, the effect of suppressing the interface resistance is obtained, the ion conductivity can be more easily controlled, and thus it becomes possible to design the structure of the electrode 100 for broader ranges. Examples of the coating material that can be used include halide solid electrolytes, sulfide solid electrolytes, oxide materials, oxide solid electrolytes, and carbonates.

The coating layer composed of a coating material may include multiple coating layers. The coating layer may include, for example, a first coating layer that covers at least part of a surface of the active material 10, and a second coating layer that covers at least part of a surface of the active material 10 and the first coating layer. This allows for a wide range of material design such as using a material that exhibits high potential stability in a region in contact with the active material in the coating layer while using a solid electrolyte having high ion conductivity in a region not in contact with the active material in the coating layer, and thus the battery lifetime and the input/output properties are expected to be improved.

Examples of the halide solid electrolytes and the sulfide solid electrolytes that can be used as the coating material are the materials disclosed as examples of the solid electrolyte 11. Examples of the oxide material that can be used include SiO₂, Al₂O₃, TiO₂, B₂O₃, NB₂O₅, WO₃, and ZrO₂. Examples of the oxide solid electrolyte that can be used include Li-Nb-O compounds such as LiNbO₃, Li-B-O compounds such as LiBO₂ and Li₃BO₃, Li-Al-O compounds such as LiAlO₂, Li-Si-O compounds such as Li₄SiO₄, Li-Ti-O compounds such as Li₂SO₄ and Li₄Ti₅O₁₂, Li-Zr-O compounds such as Li₂ZrO₃, Li-Mo-O compounds such as Li₂MoO₃, Li-V-O compounds such as LiV₂O₅, and Li-W-O compounds such as Li₂WO₄. Examples of the carbonate that can be used include lithium carbonate and lithium hydrogen carbonate.

The coating material may contain a halide solid electrolyte. A halide solid electrolyte has high ion conductivity and high high-potential stability. Thus, the use of a halide solid electrolyte as a coating material can further improve the charge/discharge efficiency of the battery.

The coating material may contain Li_{2.7}Ti_{0.3}Al_{0.7}F₆. Li_{2.7}Ti_{0.3}Al_{0.7}F₆ has higher ion conductivity and higher high-potential stability. Thus, the use of Li_{2.7}Ti_{0.3}Al_{0.7}F₆ can further improve the charge/discharge efficiency. In the description below, "Li_{2.7}Ti_{0.3}Al_{0.7}F₆" may be referred to as "LTAF".

The coating material may contain a sulfide solid electrolyte. A sulfide solid electrolyte has high ion conductivity. Thus, the use of a sulfide solid electrolyte as a coating material can further improve the input/output properties of the battery.

The active material 10 may be a composite active material that includes a halide solid electrolyte that covers at least part of the surface of the active material 10 and a sulfide solid electrolyte that covers at least part of the surface of the active material 10 and the halide solid electrolyte. The active material 10 may be, for example, a composite active material that includes LTAF that covers at least part of the surface of NCA serving as the active material 10 and LiI-LiBr-Li₃PS₄ (LPS) that covers at least part of the surface of the NCA and LTAF.

The use of the composite active material having the aforementioned feature can further improve the charge/discharge capacity, charge/discharge efficiency, and input/output properties of the battery.

The median diameter of the active material 10 may be greater than or equal to 0.01 µm and less than or equal to 100 µm. When the median diameter of the active material 10 is greater than or equal to 0.1 µm, the active material 10 and the solid electrolyte 11 easily form a good dispersed state in the electrode 100. As a result, the charge properties of the battery are improved. When the median diameter of the active material 10 is less than or equal to 100 µm, a sufficient lithium diffusion rate is ensured in the active material 10. Thus, the battery can operate at a high output.

The median diameter of the active material 10 may be greater than the median diameter of the solid electrolyte 11. In this manner, the active material 10 and the solid electrolyte 11 can form a good dispersed state.

As illustrated in Fig. 1, the active material 10, the solid electrolyte 11, and the conductive additive 12 in the electrode 100 may be in contact with one another.

The electrode 100 may include particles of the active material 10, particles of the solid electrolyte 11, and particles of the conductive additive 12.

The active material 10 content and the solid electrolyte 11 content in the electrode 100 may be the same or different from each other.

### [Method for producing electrode]

A method for producing the electrode 100 includes applying, to a support, an electrode slurry containing an active material 10, a solid electrolyte 11, a conductive additive 12, and a solvent to form an electrode 100. The support may be a current collector. The interfacial perimeter Z in the electrode 100 may be greater than 0.58 µm/µm². According to this production method, an electrode 100 that can improve the discharge capacity retention rate of the battery can be produced.

More specifically, the method for producing the electrode 100 includes preparing an electrode slurry by mixing an active material 10, a solid electrolyte 11, a conductive additive 12, and a solvent (step S1) and forming an electrode 100 by applying the electrode slurry to a support (step S2).

In step S1, a binder may be further added to the electrode slurry. In step S2, the electrode 100 may be formed by applying the electrode slurry to the support and then drying the applied electrode slurry on a heated hot plate.

The technique for controlling the interfacial perimeter Z in the electrode 100 is not particularly limited. For example, the interfacial perimeter Z can be controlled in step S1. In step S1, a shear force may be added to the electrode slurry for mixing. For example, mixing may be performed by using an automatic mortar, a rotation-revolution mixer, a rotating stirrer-type mixer equipped with a stirring blade, or the like. In addition, in step S1, mixing may be performed by applying ultrasonic waves to the electrode slurry. For example, an ultrasonic homogenizer may be used for mixing. In addition, in step S1, mixing may be performed by applying pressure fluctuations to the electrode slurry. For example, a high-pressure homogenizer may be used for mixing.

The electrode slurry prepared in step S1 contains the active material 10, the solid electrolyte 11, and the conductive additive 12 that are forming a good dispersed state. The process time necessary for forming a good dispersed state differs depending on the materials contained in the electrode slurry. Thus, an electrode slurry capable of forming an electrode 100 that satisfies the desired interfacial perimeter Z may be prepared by repeating recovering a fraction of the electrode slurry to prepare an electrode 100 therefrom and measuring the interfacial perimeter Z thereof during step S1.

### (Second Embodiment)

Fig. 2 is a cross-sectional view illustrating a schematic structure of a battery 200 according to a second embodiment.

The battery 200 includes a positive electrode 201, a negative electrode 202, and an electrolyte layer 203 disposed between the positive electrode 201 and the negative electrode 202. At least one selected from the group consisting of a positive electrode 201 and a negative electrode 202 includes the electrode 100 according to the first embodiment. According to this feature, the discharge capacity retention rate of the battery 200 can be improved.

According to this battery 200, the interfacial perimeter Z in the electrode 100 is greater than 0.58 µm/µm² since at least one selected from the group consisting of the positive electrode 201 and the negative electrode 202 includes the electrode 100 of the first embodiment. Thus, good electron conduction paths can be formed in at least one selected from the group consisting of the positive electrode 201 and the negative electrode 202. As a result, the discharge capacity retention rate of the battery 200 can be improved.

Fig. 2 illustrates the case in which the positive electrode 201 includes the electrode 100 of the first embodiment. In the example illustrated in Fig. 2, the interfacial perimeter Z in the positive electrode 201 is greater than 0.58 µm/µm².

As illustrated in Fig. 2, the positive electrode 201 may include the electrode 100 of the first embodiment. According to this feature, the discharge capacity retention rate of the battery 200 can be improved.

The negative electrode 202 may include the electrode 100 of the first embodiment although this is not illustrated in the drawings. According to this feature, the discharge capacity retention rate of the battery 200 can be improved.

Both the positive electrode 201 and the negative electrode 202 may include the electrode 100 of the first embodiment although this is not illustrated in the drawings. According to this feature, the discharge capacity retention rate of the battery 200 can be further improved.

### (Positive electrode)

The positive electrode 201 contains, for example, a positive electrode active material. The positive electrode active material contains a material that intercalates and deintercalates metal ions (for example, lithium ions). The positive electrode active material may be any material that has been disclosed as the examples of the active material 10 in the first embodiment.

In order to increase the electron conductivity, the positive electrode 201 may contain a conductive additive. The conductive additive may be any material that has been disclosed as the examples of the conductive additive 12 in the first embodiment.

The positive electrode 201 may contain a solid electrolyte. According to this feature, the ion conductivity inside the positive electrode 201 is improved, and thus the battery 200 can operate at a high output. The solid electrolyte may be any material that has been disclosed as the examples of the solid electrolyte 11 in the first embodiment.

Regarding the ratio "v1:100 - v1" of the volume (v1) of the positive electrode active material contained in the positive electrode 201 to the volume (100 - v1) of the solid electrolyte contained in the positive electrode 201, 30 ≤ v1 ≤ 95 may be satisfied. When 30 ≤ v1 is satisfied, the energy density of the battery 200 is sufficiently secured. When v1 ≤ 95 is satisfied, the battery 200 can operate at a high output.

The thickness of the positive electrode 201 may be greater than or equal to 10 µm and less than or equal to 500 µm. When the thickness of the positive electrode 201 is greater than or equal to 10 µm, the energy density of the battery 200 is sufficiently secured. When the thickness of the positive electrode 201 is less than or equal to 500 µm, the battery 200 can operate at a high output.

### (Negative electrode)

The negative electrode 202 contains, for example, a negative electrode active material. The negative electrode active material contains a material that intercalates and deintercalates metal ions (for example, lithium ions). The negative electrode active material may be any material that has been disclosed as the examples of the active material 10 in the first embodiment.

In order to increase the electron conductivity, the negative electrode 202 may contain a conductive additive. The conductive additive may be any material that has been disclosed as the examples of the conductive additive 12 in the first embodiment.

The negative electrode 202 may contain a solid electrolyte. According to this feature, the ion conductivity inside the negative electrode 202 is improved, and thus the battery 200 can operate at a high output. The solid electrolyte may be any material that has been disclosed as the examples of the solid electrolyte 11 in the first embodiment.

Regarding the ratio "v2:100 - v2" of the volume (v2) of the negative electrode active material contained in the negative electrode 202 to the volume (100 - v2) of the solid electrolyte contained in the negative electrode 202, 30 ≤ v2 ≤ 95 may be satisfied. When 30 ≤ v2 is satisfied, the energy density of the battery 200 is sufficiently secured. When v2 ≤ 95 is satisfied, the battery 200 can operate at a high output.

The thickness of the negative electrode 202 may be greater than or equal to 10 µm and less than or equal to 500 µm. When the thickness of the negative electrode 202 is greater than or equal to 10 µm, the energy density of the battery 200 is sufficiently secured. When the thickness of the negative electrode 202 is less than or equal to 500 µm, the battery 200 can operate at a high output.

### (Electrolyte layer)

The electrolyte layer 203 is a layer that contains an electrolyte. The electrolyte is, for example, a solid electrolyte. The electrolyte layer 203 may be a solid electrolyte layer. The solid electrolyte may be any material that has been disclosed as the examples of the solid electrolyte 11 in the first embodiment.

The thickness of the electrolyte layer 203 may be greater than or equal to 1 µm and less than or equal to 300 µm. When the thickness of the electrolyte layer 203 is greater than or equal to 1 µm, short-circuiting between the positive electrode 201 and the negative electrode 202 rarely occurs. When the thickness of the electrolyte layer 203 is less than or equal to 300 µm, the battery 200 can operate at a high output.

The electrolyte layer 203 may contain two or more solid electrolytes selected from the materials that have been disclosed as the examples of the solid electrolyte 11 in the first embodiment.

At least one selected from the group consisting of the positive electrode 201, the negative electrode 202, and the electrolyte layer 203 may contain a binder for the purpose of improving the adhesion between the particles. The binder is used to improve binding properties of the electrode material. Examples of the binder include polyvinylidene fluoride, polytetrafluoroethylene, polyethylene, polypropylene, aramid resin, polyamide, polyimide, polyamideimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyethersulfone, hexafluoropolypropylene, styrene butadiene rubber, and carboxymethyl cellulose. Alternatively, a styrene-based elastomer may be used as the binder.

Examples of the styrene-based elastomer include styrene-ethylene/butylene-styrene block copolymer (SEBS), styrene-ethylene/propylene-styrene block copolymer (SEPS), styrene-ethylene/ethylene/propylene-styrene block copolymer (SEEPS), styrene-butadiene rubber (SBR), styrene-butadiene-styrene block copolymer (SBS), styreneisoprene-styrene block copolymer (SIS), and hydrogenated styrene-butadiene rubber (HSBR).

Alternatively, a copolymer of two or more material selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene can be used as the binder.

Alternatively, two or more binders selected from the aforementioned binders may be mixed and used as the binder.

The battery 200 of the second embodiment can be configured as a battery of various shapes, such as a coin shape, a cylinder shape, a box shape, a sheet shape, a button shape, a flat shape, and a multilayer shape.

### (Other embodiments)

### (Appendix)

The descriptions of the aforementioned embodiments disclose the following features.

### (Feature 1)

An electrode including:
an active material;
a solid electrolyte; and
a conductive additive,
in which a length of an interface of the conductive additive per unit area of a cross section of the electrode is greater than 0.58 µm/µm².

According to the electrode of feature 1, the discharge capacity retention rate of the battery can be improved.

### (Feature 2)

The electrode according to feature 1, in which the conductive additive contains a carbon material. According to this feature, an electrode can be produced at a low cost.

### (Feature 3)

The electrode according to feature 1 or 2, in which the solid electrolyte contains at least one selected from the group consisting of a halide solid electrolyte and a sulfide solid electrolyte. According to this feature, the output density of the battery can be improved.

### (Feature 4)

The electrode according to any one of features 1 to 3, in which the active material contains a complex oxide containing a transition element. According to this feature, the average discharge voltage of the battery can be improved.

### (Feature 5)

A battery including:
a positive electrode;
a negative electrode; and
an electrolyte layer disposed between the positive electrode and the negative electrode,
in which at least one selected from the group consisting of the positive electrode and the negative electrode includes the electrode according to any one of features 1 to 4.

According to the battery of feature 5, the discharge capacity retention rate of the battery can be improved.

### EXAMPLES

The present disclosure will now be described in detail by referring to Examples and Reference Examples.

### [Positive electrode]

Positive electrodes of Examples 1 to 5 and Reference Example 1 were prepared by the following method.

### <<Example 1>>

### (Composite active material)

LiF, TiF₄, and AlF₃ were mixed by a mechanochemical milling method to synthesize a fluoride solid electrolyte. The obtained fluoride solid electrolyte had a composition, Li_{2.7}Ti_{0.3}Al_{0.7}F₆ (LTAF).

In an argon glove box with a dew point lower than or equal to -60°C, Li₂S and P₂S₅ were weighed into a molar ratio of Li₂S:P₂S₅ = 75:25. These compounds were ground and mixed in a mortar to obtain a mixture. Then the mixture was subjected to a milling treatment with a planetary ball mill (type P-7 produced by Fritsch Japan Co., Ltd.) for 10 hours under the condition of 510 rpm. As a result, a glassy solid electrolyte was obtained. The glassy solid electrolyte was heat-treated in an inert atmosphere at 270°C for 2 hours. As a result, a glass ceramic-type sulfide solid electrolyte, Li₂S-P₂S₅ (LPS) was obtained.

Li(NiCoAl)O₂ (NCA) having a median diameter of 5 µm was prepared as a positive electrode active material. NCA and LTAF were mixed so that the ratio thereof on the weight basis was 97.4:2.6 to obtain a mixture. Then the mixture was subjected to a composing treatment by using a particle composing apparatus to prepare a coated active material in which the surface of NCA was coated with LTAF. In the description below, the coated active material in which the surface of NCA is coated with LTAF may be referred to as "LTAF/NCA". Nobilta NOB-MINI produced by HOSOKAWA MICRON CORPORATION was used as the particle composing apparatus. The operation conditions of the apparatus were as follows.
Electrical power: 12 W per gram of a material
Rotation rate: 6000 rpm
Treatment time: 30 minutes

LPS was dispersed in tetralin (THN) serving as an organic solvent by using a dispersing machine to prepare an LPS dispersion having a solid component ratio of 30%. An ultrasonic homogenizer was used as the dispersing machine. Next, 9000 parts by mass of LTAF/NCA and 275.1 parts by mass of the LPS dispersion were fed to a mixing apparatus. A planetary mixer was used as the mixing apparatus. Mixing and addition of the solvent were alternately repeated in the following order so as to prepare a composite active material in which the surface of LTAF/NCA was coated with LPS. In the description below, the composite active material in which the surface of LTAF/ NCA is coated with LPS may be referred to as "LPS/LTAF/NCA". The aforementioned operations were all performed in an environment in which the dew point was controlled to a temperature lower than or equal to -70°C. The operation conditions of the mixing apparatus were as follows.
(1) Mixing rotation rate: 70 rpm, time: 15 minutes
(2) Addition of solvent THN (34 parts by mass)
(3) Mixing rotation rate: 100 rpm, time: 15 minutes
(4) Addition of solvent THN (30 parts by mass)
(5) Mixing rotation rate: 100 rpm, time: 15 minutes
(6) Addition of solvent THN (23 parts by mass)
(7) Mixing rotation rate: 100 rpm, time: 3 hours

### (Binder solution)

In an argon glove box with a dew point lower than or equal to -60°C, a binder A was dissolved in tetralin to prepare a binder solution A having a solid component ratio of 5%. Styrene-butadiene rubber (SBR) was used as the binder A. The viscosity of the prepared binder solution A was measured with a viscometer. HAAKE MARS40 produced by Thermo Fisher Scientific Inc. was used as the viscometer. The viscosity of the binder solution A was 388 mPa·s at a measurement temperature of 25°C and a shear rate of 40/s.

### (Positive electrode slurry)

LPS/LTAF/NCA was prepared as a positive electrode active material. LPS was prepared as a solid electrolyte. Acetylene black (Li-435 produced by Denka Company Limited, average particle diameter: 23 nm) and vapor-grown carbon fibers (VGCF-H produced by Resonac Holdings Corporation, average fiber diameter: 150 nm, average length: 6 µm) were prepared as the conductive additive. In the description below, the acetylene black may be referred to as "AB" and the vapor-grown carbon fibers may be referred to as "VGCF" (registered trademark).

First, in an argon glove box with a dew point lower than or equal to -60°C, a positive electrode active material, a solid electrolyte, a dispersing agent, a binder solution A, and tetralin were mixed to obtain a first liquid mix. The first liquid mix was dispersed for 30 minutes by using an ultrasonic homogenizer to obtain a first dispersion. Next, a conductive additive was added to the first dispersion and the resulting mixture was mixed to obtain a second liquid mix. The second liquid mix was dispersed for 50 minutes by using an ultrasonic homogenizer to obtain a positive electrode slurry. In the description below, the time for dispersing the second liquid mix by using the ultrasonic homogenizer is referred to as "second dispersing time".

The blend ratio of the solid components of the positive electrode slurry was LPS/LTAF/NCA:LPS:dispersing agent:binder A:VGCF:AB = 80.7:16.5:0.0740:0.310:2.24:0.221 (mass ratio). The solid component ratio of the positive electrode slurry was 72.0%.

In an argon glove box with a dew point lower than or equal to -60°C, the positive electrode slurry was applied to one surface of an aluminum foil that functioned as a positive electrode current collector and the applied positive electrode slurry was dried for 10 minutes on a hot plate heated to 120°C. Thus, a positive electrode of Example 1 was obtained.

### <<Example 2>>

A positive electrode of Example 2 was obtained by the same method as in Example 1 except that the second dispersing time was changed to 30 minutes.

### <<Example 3>>

A positive electrode of Example 3 was obtained by the same method as in Example 1 except that the second dispersing time was changed to 20 minutes.

### <<Example 4>>

### (Binder solution)

In an argon glove box with a dew point lower than or equal to -60°C, a binder B was dissolved in tetralin to prepare a binder solution B having a solid component ratio of 5%. Styrene-butadiene rubber (SBR) having a composition different from that of the binder A was used as the binder B. The viscosity of the prepared binder solution B was measured with a viscometer (HAAKE MARS40 produced by Thermo Fisher Scientific Inc.). The viscosity of the binder solution B was 187 mPa·s at a measurement temperature of 25°C and a shear rate of 40/s.

A positive electrode of Example 4 was obtained by the same method as in Example 1 except that the binder B was used instead of the binder A and the second dispersing time was changed to 90 minutes.

### <<Example 5>>

A positive electrode of Example 5 was obtained by the same method as in Example 4 except that the second dispersing time was changed to 30 minutes.

### <<Reference Example 1>>

A positive electrode of Reference Example 1 was obtained by the same method as in Example 4 except that the second dispersing time was changed to 20 minutes.

### [Measurement of interfacial perimeter]

The interfacial perimeter Z in the positive electrode was measured by using each of the positive electrodes of Examples 1 to 5 and Reference Example 1.

First, in a die, positive electrodes each formed on one surface of aluminum foils were stacked so that the positive electrodes face each other to thereby obtain a multilayer body. The multilayer body was pressed by a flat-plate hot press machine heated to 120°C. Thus, an electrode pellet in which an aluminum foil, a positive electrode, and an aluminum foil are stacked in this order was obtained.

Next, the electrode pellet was processed with a cross section polisher (SM-09010 produced by JEOL) to form a smooth and flat cross section. Here, the cross section was processed so that the cross section parallel to the thickness direction of the electrode pellet was formed.

The cross section of the electrode pellet was observed with an SEM (SU-70 produced by Hitachi High-Technologies Corporation) and a cross section image (magnification: 500x) was acquired. Here, the area A of the measurement region of the cross section image was 4.5 × 10⁴ µm². The median diameter D of NCA serving as an active material was 5 µm, and thus, the area A of the measurement region satisfied A ≥ (20D)².

Next, the cross section image was analyzed by image processing software Image J. First, a binarized image was obtained from the SEM observation region by designating white as the background. Next, the Analyze Particles function was used to identify particles of the conductive additive from the binarized image, and the total L of the lengths of the interfaces of the identified particles of the conductive additive was calculated. Here, in order to remove noise after the image processing, particles having a particle area less than or equal to 5 pixels among the identified particles of the conductive additive were not used in calculating the interfacial perimeter. Lastly, the total L was divided by the observation area A to obtain the length of the interface of the conductive additive per unit area of the cross section of the electrode, that is, the interfacial perimeter Z. The interfacial perimeters Z in the positive electrodes of Examples 1 to 5 and Reference Example 1 obtained by the aforementioned method are indicated in Table 1.

### [Negative electrode]

Negative electrodes of Examples 1 to 5 and Reference Example 1 were prepared by the following method.

Li₄Ti₅O₁₂ was prepared as the negative electrode active material. In the description below, "Li₄Ti₅O₁₂" may be referred to as "LTO". LPS was prepared as a solid electrolyte. VGCF was prepared as a conductive additive. The same binder solution B as in Example 4 was prepared as a binder solution.

First, in an argon glove box with a dew point lower than or equal to -60°C, a negative electrode active material, a solid electrolyte, a dispersing agent, and a binder solution A were mixed to obtain a first liquid mix. The first liquid mix was dispersed for 30 minutes by using an ultrasonic homogenizer to obtain a first dispersion. Next, a conductive additive was added to the first dispersion and the resulting mixture was mixed to obtain a second liquid mix. The second liquid mix was dispersed for 50 minutes by using an ultrasonic homogenizer to obtain a negative electrode slurry.

The blend ratio of the solid components of the negative electrode slurry was LTO/dispersing agent/LPS/VGCF/binder A = 100/1.88/33.6/1.1/0.86 (mass ratio). The solid component ratio of the slurry was 56.0%.

In an argon glove box with a dew point lower than or equal to -60°C, the negative electrode slurry was applied to one surface of an aluminum foil that functioned as a negative electrode current collector and the applied negative electrode slurry was dried for 10 minutes on a hot plate heated to 120°C. Thus, a negative electrode was obtained.

For the negative electrodes of Examples 1 to 5 and Reference Example 1, the coating weight of the negative electrode prepared on one surface of the aluminum foil was adjusted as follows. The charge capacity per unit area of the negative electrode prepared on one surface of the aluminum foil was adjusted to be 1.1 relative to the charge capacity per unit area of the positive electrode prepared on one surface of the aluminum foil. Here, a value (theoretical capacity) of 210 mAh/g was used as the charge capacity per unit mass of the positive electrode active material. Furthermore, a value (theoretical capacity) of 175 mAh/g was used as the charge capacity per unit mass of the negative electrode active material.

### [Electrolyte layer]

Electrolyte layers of Examples 1 to 5 and Reference Example 1 were prepared by the following method.

LPS was prepared as a solid electrolyte. The same binder solution B as in Example 4 was prepared as a binder solution.

First, in an argon glove box with a dew point lower than or equal to -60°C, a solid electrolyte, a dispersing agent, and a binder solution A were mixed to obtain a liquid mix. The liquid mix was dispersed in tetralin by using an ultrasonic homogenizer to obtain a solid electrolyte slurry.

In an argon glove box with a dew point lower than or equal to -60°C, the solid electrolyte slurry was applied to one surface of an aluminum foil and the applied solid electrolyte slurry was dried for 10 minutes on a hot plate heated to 120°C. Thus, an electrolyte layer was obtained.

### [Negative electrode counter electrode]

Negative electrode counter electrodes of Examples 1 to 5 and Reference Example 1 were prepared by the following method.

An electrolyte layer was stacked on the negative electrode so that the electrolyte layer formed on one surface of the metal foil and the negative electrode formed on one surface of the aluminum foil opposed each other so as to obtain a multilayer body. The multilayer body was pressed by a flat-plate hot press machine heated to 120°C. After the thermal pressing, the metal foil was removed from the electrolyte layer. Thus, a negative electrode counter electrode in which the electrolyte layer, the negative electrode, and the aluminum foil were laminated in this order was obtained.

### [Battery]

Batteries of Examples 1 to 5 and Reference Example 1 were prepared by the following method.

First, in a die, the positive electrode was stacked on the negative electrode counter electrode so that the positive electrode formed on one surface of the aluminum foil and electrolyte layer of the negative electrode counter electrode opposed each other so as to obtain a multilayer body. The multilayer body was pressed by a flat-plate hot press machine heated to 120°C. Thus, a power generation element in which the aluminum foil, the positive electrode, the electrolyte layer, the negative electrode, and the aluminum foil were stacked in this order was obtained.

Next, a current collecting lead was attached to each of the aluminum foils by using a carbon tape. Lastly, the power generation element was isolated from the ambient atmosphere by using an aluminum laminate film to obtain a battery.

The current collecting leads attached to the aluminum foils extended from the space in which the power generation element was hermetically sealed with the aluminum laminate film to the outside where no such seal was provided. For the charge and discharge measurement, the current collecting leads were attached so that the power generation element was electrically connected to the measurement device via the current collecting leads. Furthermore, the current collecting leads were not electrically in contact with the aluminum vapor deposited film contained in the aluminum laminate film.

### [Charge/discharge test]

The charge/discharge test was performed under the following conditions by using the batteries of Examples 1 to 5 and Reference Example 1.

The battery was placed in a constant-temperature vessel at 25°C.

Constant-current charging was performed at a current value of 0.68 mA equivalent to the 0.333 C rate (3 hour rate) with respect to the theoretical capacity of the battery, and the charging was ended when the voltage reached 2.7 V.

Next, constant-voltage charging was performed at a voltage of 2.7 V, and the charging was ended when the current value was below 20 µA equivalent to the 0.01 C rate.

After an interval of 10 minutes, constant-current discharging was performed as before at a current value of 0.68 mA equivalent to the 0.333 C rate (3 hour rate) with respect to the theoretical capacity of the battery, and the discharging was ended when the voltage reached 1.5 V.

Next, constant-voltage discharging was performed at a voltage of 1.5 V, and the discharging was ended when the current value was below 20 µA equivalent to the 0.01 C rate.

The charge/discharge test was performed for a total of two times by the same method as described above, and the discharge capacity C_{0.333} observed when the constant-current discharging was performed at a 0.333 C rate during the second charge/discharge test was measured.

Next, constant-current charging was performed at a current value of 0.68 mA equivalent to the 0.333 C rate (3 hour rate) with respect to the theoretical capacity of the battery, and the charging was ended when the voltage reached 2.7 V.

Next, constant-voltage charging was performed at a voltage of 2.7 V, and the charging was ended when the current value was below 20 µA equivalent to the 0.01 C rate.

After an interval of 10 minutes, constant-current discharging was performed at a current value of 40 mA equivalent to the 20 C rate with respect to the theoretical capacity of the battery, and the discharging was ended when the voltage reached 1.5 V.

Next, constant-voltage discharging was performed at a voltage of 1.5 V, and the discharging was ended when the current value was below 20 µA equivalent to the 0.01 C rate.

The discharge capacity C₂₀ observed when the constant-current discharging was performed at a 20 C rate was measured.

The ratio determined by "a value obtained by dividing the discharge capacity C₂₀ by the discharge capacity C_{0.333} (C₂₀/C_{0.333}) × 100" was assumed to be the discharge capacity retention rate (%). The results are indicated in Table 1.

**[Table 1]**

| | Positive electrode | | | Battery |
|---|---|---|---|---|
| | Binder | Second dispersing time (min) | Interfacial perimeter Z (µm/µm²) | Discharge capacity retention rate (%) |
| Example 1 | A (solution viscosity: 388 mPa·s) | 50 | 0.91 | 76.9 |
| Example 2 | A (solution viscosity: 388 mPa·s) | 30 | 0.80 | 76.5 |
| Example 3 | A (solution viscosity: 388 mPa·s) | 20 | 0.72 | 71.2 |
| Example 4 | B (solution viscosity: 187 mPa·s) | 90 | 0.61 | 70.8 |
| Example 5 | B (solution viscosity: 187 mPa·s) | 30 | 0.61 | 70.6 |
| Reference Example 1 | B (solution viscosity: 187 mPa·s) | 20 | 0.58 | 70.3 |

### <<Discussions>>

As indicated in Table 1, the interfacial perimeters Z in the positive electrodes of Examples 1 to 5 were greater than 0.58 µm/µm². Meanwhile, the interfacial perimeter Z in the positive electrode of Reference Example 1 was 0.58 µm/µm². Comparing Examples 4 and 5 and Reference Example 1 presumably reveals that aggregates of the conductive additive formed easily in the positive electrode of Reference Example 1 since the second dispersing time was shorter than that in Examples 4 and 5, and since the dispersibility of the conductive additive decreased, the interfacial perimeter Z decreased. Moreover, although the second dispersing time was 20 minutes in both Example 3 and Reference Example 1, the interfacial perimeter Z in the positive electrode of Reference Example 1 was smaller than the interfacial perimeter Z in the positive electrode of Example 3. This is presumably because the viscosity of the binder solution B was smaller than the viscosity of the binder solution A, specifically, one half or less of the viscosity of the binder solution A, and thus aggregates of the conductive additive formed easily, the dispersibility of the conductive additive had decreased, and thus the interfacial perimeter Z had decreased. The discharge capacity retention rate of the batteries improved by using the positive electrodes of Examples 1 to 5.

Note that although the electrode of the present disclosure was used as the positive electrode in the aforementioned examples, the same effects are expected even when the electrode of the present disclosure is used as a negative electrode.

As such, according to the present disclosure, an electrode suitable for improving the discharge capacity retention rate of the battery can be provided.

### Industrial Applicability

The electrode of the present disclosure can be used in, for example, a battery (for example, an all-solid-state lithium ion secondary battery).

### Reference Signs List

100 electrode
10 active material
11 solid electrolyte
12 conductive additive
12f interface
200 battery
201 positive electrode
202 negative electrode
203 electrolyte layer

## Claims

1. An electrode comprising:
an active material;
a solid electrolyte; and
a conductive additive,
wherein a length of an interface of the conductive additive per unit area of a cross section of the electrode is greater than 0.58 µm/µm².

2. The electrode according to claim 1, wherein the conductive additive contains a carbon material.

3. The electrode according to claim 1, wherein the solid electrolyte contains at least one selected from the group consisting of a halide solid electrolyte and a sulfide solid electrolyte.

4. The electrode according to claim 1, wherein the active material contains a complex oxide containing a transition element.

5. A battery comprising:
a positive electrode;
a negative electrode; and
an electrolyte layer disposed between the positive electrode and the negative electrode,
wherein at least one selected from the group consisting of the positive electrode and the negative electrode includes the electrode according to any one of claims 1 to 4.
